# EUROPEAN PATENT APPLICATION

(11) **EP 3 272 569 A1**
(43) Date of publication of application: **24.01.2018**
(21) Application number: 15885468.7
(22) Date of filing: 19.03.2015
(51) Int. Cl.: B60K 35/00, G02B 27/01

(54) **DISPLAY DEVICE**

(71) Applicant: Pioneer Corporation, Tokyo 113-0021 (JP); Tohoku Pioneer Corporation, Tendo-shi, Yamagata 994-8585 (JP)
(72) Inventor: CHONAN, Ryosuke, Tendo-shi Yamagata 994-8585 (JP); WATANABE, Hiroaki, Tendo-shi Yamagata 994-8585 (JP); SATOU, Nobuyuki, Tendo-shi Yamagata 994-8585 (JP)
(74) Representative: Viering, Jentschura & Partner mbB Patent- und Rechtsanwälte
(86) International application number: PCT/JP2015/058183
(87) International publication number: WO 2016/147372

(57) **Abstract**

The display device displays information by the display member. In the display state, an opening formed on one surface of the housing is opened, and the display member is positioned outside the opening. On the other hand, in the non-display state, the display member is received in the housing, and the opening is closed by the plurality of covers. The plurality of covers are movable to vary an opened area of the opening, and each of the covers is smaller in area than the opening. The drive device switches between the display state and the non-display state by moving the plurality of covers. One cover of the plurality of covers is moved by the drive device, and another cover of the plurality of covers is moved by the one cover.

## Description

### TECHNICAL FIELD

The present invention relates to a display device having an opening/closing mechanism of covers.

### BACKGROUND TECHNIQUE

There is known a head-up display device mounted near a driver's seat of a vehicle. Patent Reference 1 discloses an on-vehicle head-up display device including a combiner for displaying images and a cover. In this head-up display device, when the combiner is not in use, the cover is covering the combiner from above. On the other hand, when the combiner is in use, the cover is retreated from the space above the combiner, and the combiner stands up to be exposed.

### PRIOR ART REFERENCES

### PATENT REFERENCES

Patent Reference 1: Japanese Patent Application Laid-Open under No. 2013-154817 (see. FIGS. 1 and 5)

### SUMMARY OF THE INVENTION

### PROBLEM TO BE SOLVED BY THE INVENTION

Since the cover of Patent Reference 1 is of a single plate-type and needs to be moved between a stowed state and an exposed state of the combiner, the area for arranging the cover requires an area of at least twice the cover. The area in front of the driver' s seat of the vehicle, e.g., the area on the dashboard is limited. Therefore, if the cover occupying such a large area is used, the head-up display device becomes large in size.

The above is an example of the problem to be solved by the present invention. It is an object of the present invention to provide a display device which occupies small area by the cover and can be miniaturized as a whole.

### MEANS FOR SOLVING THE PROBLEM

An invention described in claims is a display device comprising: a display member configured to display information; a housing configured to receive the display member; an opening formed at one surface of the housing; a plurality of covers movable to vary an opened area of the opening, each of the covers being smaller in area than the opening; and a drive device configured to move the covers, wherein one cover of the plurality of covers is moved by the drive device, and wherein another cover of the plurality of covers is moved by the one cover.

### BRIEF DESCRIPTION OF THE DRAWINGS

FIGS. 1A and 1B are perspective views illustrating ahead-up display according to embodiments.
FIG. 2 is a perspective view illustrating an internal structure of the head-up display.
FIGS. 3A and 3B are a plan view and a side view illustrating the internal structure of the head-up display.
FIGS. 4A to 4D illustrate operation when covers are opened in a first embodiment.
FIGS. 5A to 5D illustrate operation when the covers are closed in the first embodiment.
FIGS. 6A and 6B are views for explaining an urging structure by urging springs.
FIGS. 7A and 7B are views for explaining operation of a feed screw receiver.
FIGS. 8A to 8D illustrate operation when the covers are closed in a second embodiment.

### DETAILED DESCRIPTION OF THE PREFERRED EMBODIMENTS

According to one aspect of the present invention, there is provided a display device comprising: a display member configured to display information; a housing configured to receive the display member; an opening formed at one surface of the housing; a plurality of covers movable to vary an opened area of the opening, each of the covers being smaller in area than the opening; and a drive device configured to move the covers, wherein one cover of the plurality of covers is moved by the drive device, and wherein another cover of the plurality of covers is moved by the one cover.

The above display device displays information by the display member. In the display state, an opening formed on one surface of the housing is opened, and the display member is positioned outside the opening. On the other hand, in the non-display state, the display member is received in the housing, and the opening is closed by the plurality of covers . The plurality of covers are movable to vary an opened area of the opening, and each of the covers is smaller in area than the opening. The drive device switches between the display state and the non-display state by moving the plurality of covers. One cover of the plurality of covers is moved by the drive device, and another cover of the plurality of covers is moved by the one cover.

In one mode of the above display device, in a state where the opening is closed by the plurality of covers, the one cover is positioned nearer from a user than the another cover.

In another mode of the above display device, in a state where the display member is standing up, the another cover is positioned over the one cover. In still another mode of the above display device, in the state where the display member is standing up, the another cover and the one cover are positioned farther from the user than the display member.

In still another mode of the above display device, the housing is formed with first guide grooves at positions corresponding to both sides of the one cover, the housing is formed with second guide grooves at positions corresponding to both sides of the another cover, and the first guide grooves extend to a nearer position to the user than the second guide grooves.

In still another mode of the above display device, a projecting part is formed at both ends of the one cover and one end of the another cover, and the projecting part of the another cover engages with the projecting parts of the one cover to move the another cover together with the one cover.

In still another mode of the above display device, the drive device comprises: a motor configured to generate driving force by rotation; and a transfer unit configured to transfer the driving force to the covers, and the transfer unit comprises: a plurality of gears configured to transfer the rotation of the motor; and a feed screw configured to rotate by rotation of the gears to move the one cover. In a preferred example, the feed screw is arranged on one side of the plurality of covers, and the one cover is formed with a feed screw receiver on the one side of the plurality of covers, the feed screw receiver being formed with a rack. In a preferred example, the display device further comprises a first urging unit configured to urge the rack in a direction of the feed screw.

Still another mode of the above display device further comprises a second urging unit configured to urge the another cover downward. Thus, the another cover moves together with the one cover.

In a preferred example, the number of the another cover is one.

### EMBODIMENTS

Preferred embodiments of the present invention will be described below with reference to the attached drawings.

### [1st Embodiment]

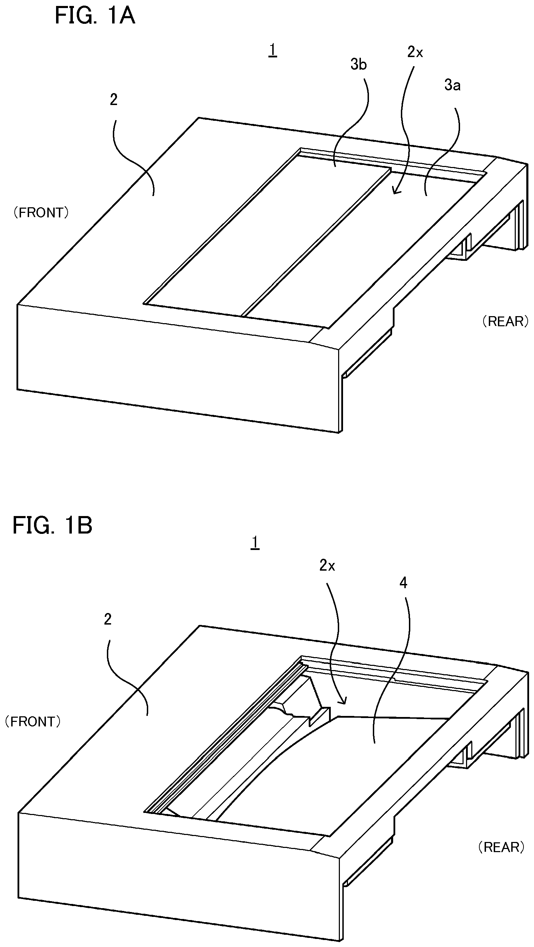

FIGS. 1A and 1B are perspective views illustrating an appearance of a head-up display (hereinafter referred to as "HUD") 1 according to a first embodiment of the present invention. It is noted that, when the HUD 1 is mounted on a dashboard of a vehicle, "FRONT" in FIGS. 1A and 1B is the side of the front glass of the vehicle, and "REAR" is the side of the seats. Therefore, a user (driver) is positioned on the rear side of the HUD 1. The rear side in FIGS. 1A and 1B is the "near side" from the user, and the front side in FIGS. 1A and 1B is the "far side" from the user.

FIG. 1A illustrates a state where covers of the HUD 1 are closed. As shown, the HUD 1 is provided with an opening 2x on an upper surface of a housing 2, and the opening 2x is closed by a plurality of covers 3a and 3b. The covers 3a and 3b are plate-type covers, respectively. As shown, in the state where the covers are closed, the cover 3a is positioned on the nearer side of the user than the cover 3b.

For the sake of convenience, the cover 3a will be hereinafter referred to as "the main cover 3a", and the cover 3b will be hereinafter referred to as "the sub cover 3b". Also, "the covers 3" will be used to simply indicate both the main cover 3a and the sub cover 3b. The main cover 3a corresponds to "one cover" of the present invention, and the sub cover 3b corresponds to "another cover" of the present invention.

In the state where the opening 2x of the housing 2 is closed, the main cover 3a and the sub cover 3b are aligned in the front-rear direction of the HUD 1 and close the opening 2x of the housing 2. This state is a received state (non-display state) of the HUD 1.

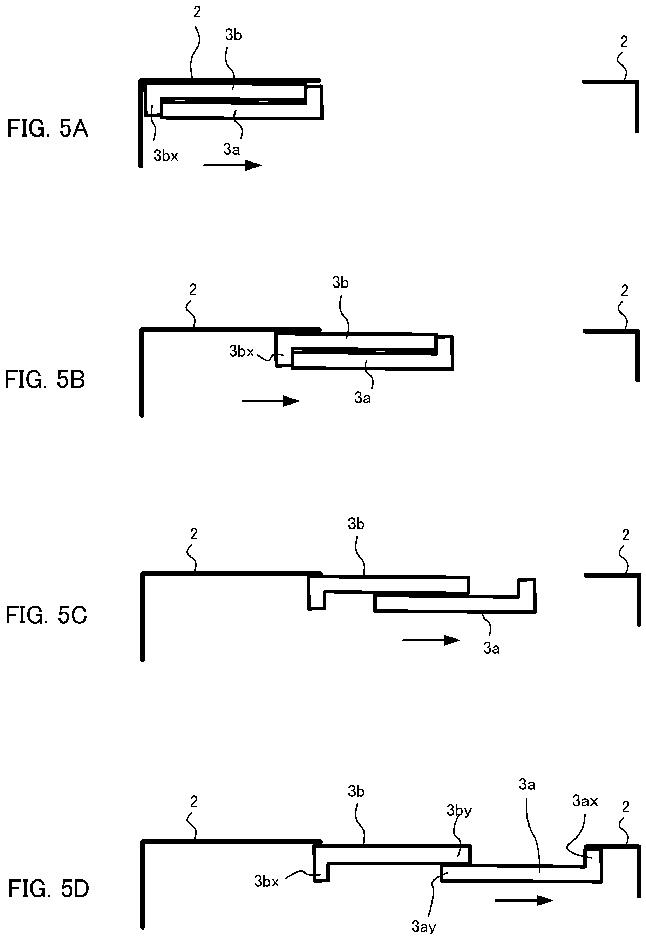

FIG. 1B illustrates a state where the covers 3 are opened (but the combiner 4 has not stood up yet) . When a combiner raising mechanism not shown operates in a state where the opening 2x of the housing 2 is opened as shown, the combiner 4 stands up in the opening 2x. This state is a display state to display images by the HUD 1. In the state where the combiner 4 is standing up, the main cover 3a and the sub cover 3b are positioned on the farther side than the combiner 4 from the user. Also, as shown in FIG. 5A described later, in the state where the combiner 4 is standing up, the sub cover 3b is positioned over the main cover 3a. The combiner 4 is an example of the display member of the present invention.

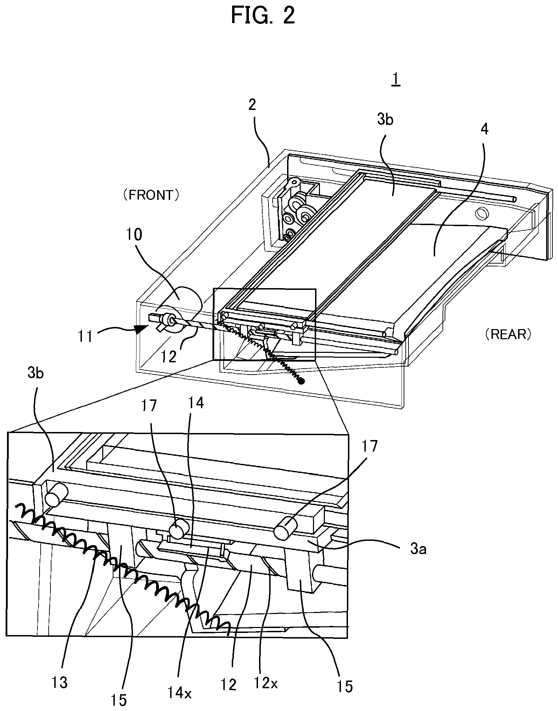

Next, a drive device for opening and closing the covers 3 will be described. FIG. 2 is a perspective view illustrating an internal structure of the HUD 1. The drive device is a mechanism to drive the main cover 3a and the sub cover 3b, and mainly includes a motor 10, a plurality of gears 11 and a rotatable feed screw 12. The motor 10 is connected to the feed screw 12 via the gears 11. The rotation of the motor 10 is transferred to the feed screw 12 via the gears 11 to rotate the feed screw 12. The gears 11 and the feed screw 12 are the transfer unit of the present invention.

A spiral groove 12x is formed on the outside of the feed screw 12. On the other hand, the main cover 3a is provided with a feed screw receiver 14 formed with a rack 14x. The rack 14x of the feed screw receiver 14 engages with the groove 12x of the feed screw 12. When the feed screw 12 is rotated by the rotation of the motor 10, the rack 14x of the feed screw receiver 14 moves along the groove 12x of the feed screw 12. As a result, the main cover 3a slides in a direction parallel with the feed screw 12. The main cover 3a is provided with two bearings 15 into which the axis of the feed screw 12 is inserted.

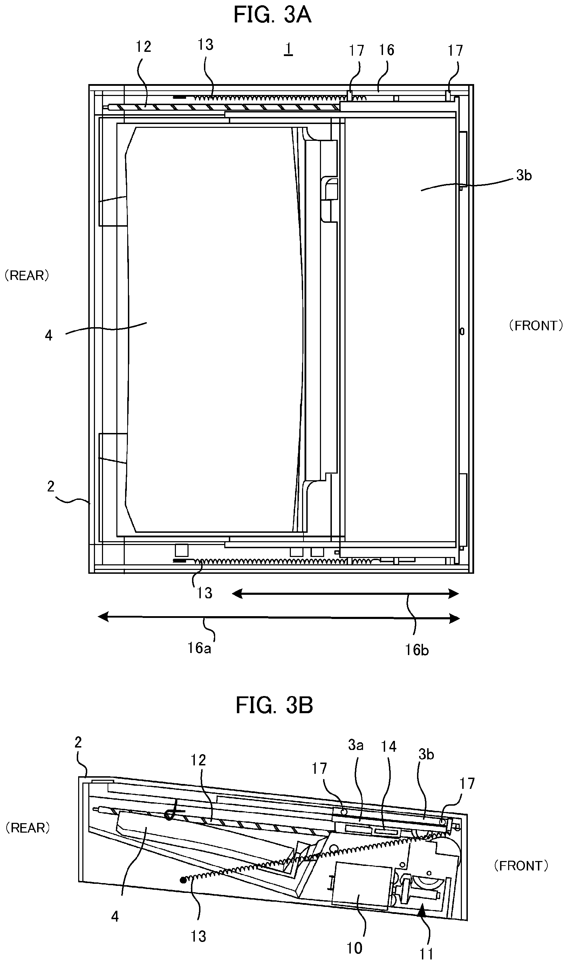

FIG. 3A is a plan view illustrating the internal structure of the HUD 1, and FIG. 3B is a side view illustrating the internal structure of the HUD 1. FIGS. 3A and 3B illustrate the state where the covers 3 are opened. In the state where the covers 3 are opened, the main cover 3a is received under the sub cover 3b.

As illustrated in FIG. 3A, the feed screw 12 is arranged along one side of the main cover 3a and the sub cover 3b. On the inner walls of the housing 2, guide grooves 16 are formed on both sides of the main cover 3a and the sub cover 3b. Specifically, a main cover guide groove and a sub cover guide groove are separately formed. The range of the main cover guide groove is shown by the arrow 16a, and the range of the sub cover guide groove is shown by the arrow 16b. The main cover guide groove and the sub cover guide groove are formed substantially in parallel with the feed screw 12. Since the main cover 3a is received under the sub cover 3b in the state where the covers 3 are opened, the main cover guide groove is formed under the sub cover guide groove. The main cover guide groove and the sub cover guide groove are formed with the lengths corresponding to the moving distances of the main cover 3a and the sub cover 3b for opening and closing the covers 3, respectively. As shown by the arrows 16a and 16b, since the moving distance of the main cover 3a is longer than the moving distance of the sub cover 3b, the main cover guide groove is longer than the sub cover guide groove and extending to the nearer side of the user. The main cover guide groove corresponds to a first guide groove of the present invention, and the sub cover guide groove corresponds to a second guide groove of the present invention.

As illustrated in FIGS. 2A, 2B, 3A and 3B, projections 17 are formed on the sides of the main cover 3a and the sub cover 3b. The projections 17 formed on the main cover 3a engage with the main cover guide groove, and the projections 17 formed on the sub cover 3b engage with the sub cover guide groove. Thus, the main cover 3a and the sub cover 3b slides along the guide grooves, respectively.

As described above, the rotation of the motor 10 is transferred to the main cover 3a via the gears 11 and the feed screw 12 to move the main cover 3a. On the other hand, the rotation power of the motor 10 is not transferred to the sub cover 3b, and the sub cover 3b moves to follow the movement of the main cover 3a. This will be described in more detail.

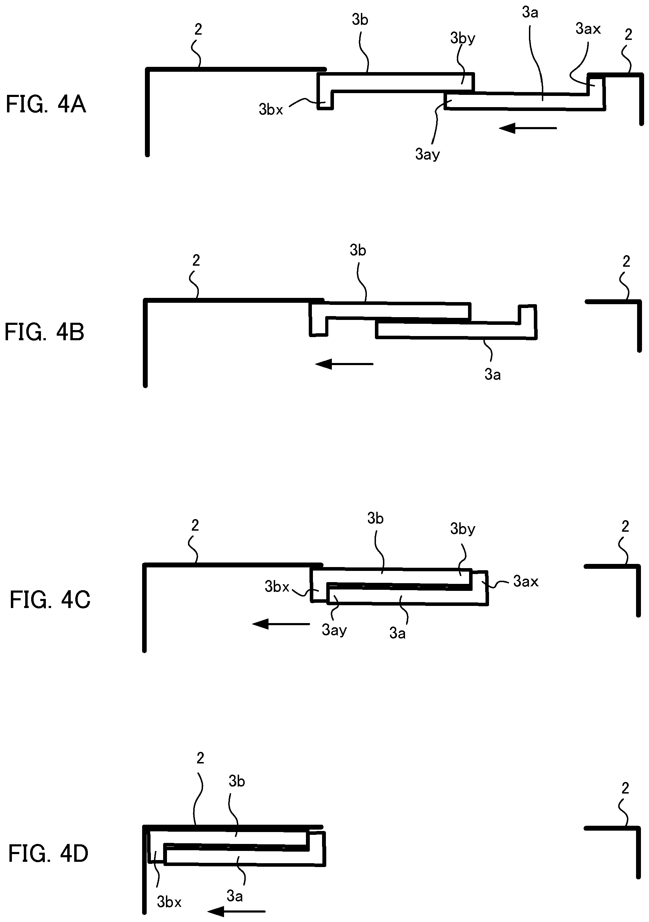

FIGS. 4A to 4D are side views schematically illustrating slide movement of the main cover 3a and the sub cover 3b when the covers 3 are opened. FIG. 4A illustrates the state where the covers 3 are closed. The main cover 3a and the sub cover 3b are aligned in the opening 2x of the housing 2 to close the opening 2x. One end of the main cover 3a is formed with a projecting part 3ax, and the other end 3ay is flat. Also, one end of the sub cover 3b is formed with a projecting part 3bx, and the other end 3by is flat. In the closed state of the covers 3, the end 3ay of the main cover 3a abuts the end 3by of the sub cover 3b.

When the covers 3 are opened, the motor 10 is driven to rotate the feed screw 12, and the main cover 3a is slid in the arrow direction as shown in FIG. 4B. As the main cover 3a is slid, the projecting part 3ax of the main cover 3a abut the end 3by of the sub cover 3b, and the end 3ay of the main cover 3a abut the projecting part 3bx of the sub cover 3b. Thus, the force that the feed screw 12 slides the main cover 3a is transferred to the sub cover 3b. Thereby, the sub cover 3b slides in the direction of the arrow direction together with the main cover 3a. Eventually, as shown in FIG. 4D, the projecting part 3bx of the sub cover 3b abuts the inner wall of the housing 2, and the movement of the main cover 3a and the sub cover 3b is stopped. In this way, the covers 3 are moved, and the opening 2x of the housing 2 is opened. After that, while it is not shown in FIGS. 4A to 4D, the combiner 4 stands up in the opening 2x.

FIGS. 5A to 5D are side views schematically illustrating slide movement of the main cover 3a and the sub cover 3b when the covers 3 are closed. FIG. 5A illustrates the state where the covers 3 are opened. First, while it is not shown in FIGS. 5A to 5D, the combiner 4 that was standing in the opening 2x is received in the housing 2. Next, the motor 10 is driven to rotate the feed screw 12, and the main cover 3a is slid in the arrow direction. At this time, since the sub cover 3b is on the main cover 3a and the sub cover 3b is urged downward by urging springs 13 as described later in detail, the sub cover 3b slides in the arrow direction together with the main cover 3a as shown in FIG. 5B.

When the main cover 3a is slid further, as shown in FIG. 5C, the sub cover 3b moves to the end of its movable range, i.e., the end of the sub cover guiding groove, and stops there. Thereafter, only the main cover 3a is further slid in the arrow direction. Then, as shown in FIG. 5D, the main cover 3a moves to the end of its movable range, i.e., the end of the main cover guide groove and stops there. In this way, the opening 2x of the housing 2 is closed by the main cover 3a and the sub cover 3b.

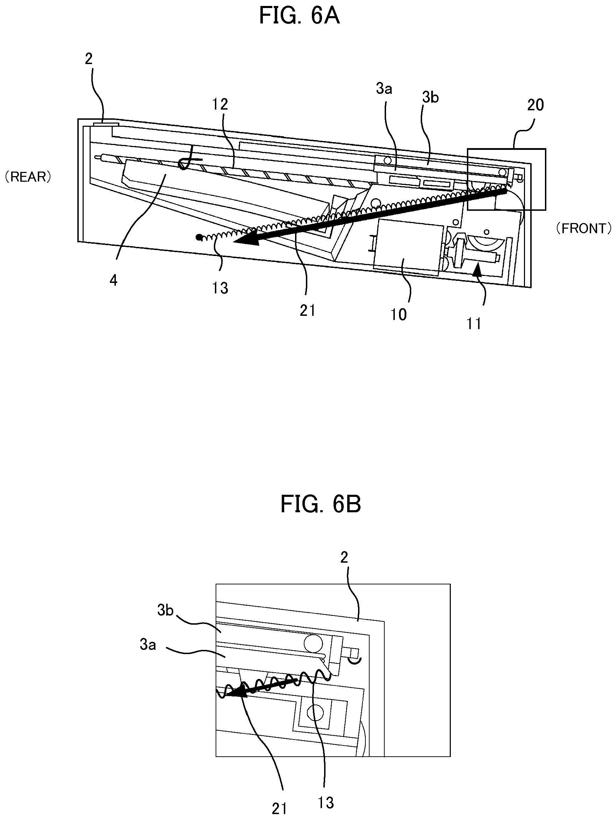

Next, the urging structure by the urging springs 13 will be described. As shown in FIG. 3A, the urging springs 13 are provided on both sides of the main cover 3a and the sub cover 3b. FIG. 6A illustrates the attached state of the urging spring 13. FIG. 6B is a magnified view of the part of the reference numeral 20 in FIG. 6A. As shown in FIGS. 6A and 6B, one end of the urging spring 13 is attached to the end of the sub cover 3b, and the other end is attached to the inner wall of the housing 2. By this, the sub cover 3b is urged obliquely downward as indicated by the arrow 21. While the urging spring 13 is attached to the sub cover 3b as shown in FIG. 6B, a part of the urging spring 13 is hooked on the main cover 3a so that the urging force is given to both of the main cover 3a and the sub cover 3b. Thus, vibration at the time of driving the vehicle can be suppressed. Also, by this urging structure, as described with reference to FIG. 5B, the main cover 3a and the sub cover 3b slide integrally. The urging springs 13 are an example of the second urging unit according to the present invention.

In the example of FIGS. 6A and 6B, one end of the urging spring 13 is attached to the sub cover 3b and a part of the urging spring 13 is hooked on the main cover 3a so that the urging force is given to both of the main cover 3a and the sub cover 3b. Instead, such a structure can be employed that one end of the urging spring 13 is attached to the main cover 3a and a part of the urging spring 13 is hooked on the sub cover 3b so that the urging force is given to both the main cover 3a and the sub cover 3b. Otherwise, urging springs may be separately attached to each of the main cover 3a and sub cover 3b. In this case, two urging springs are provided on each side of the cover 3.

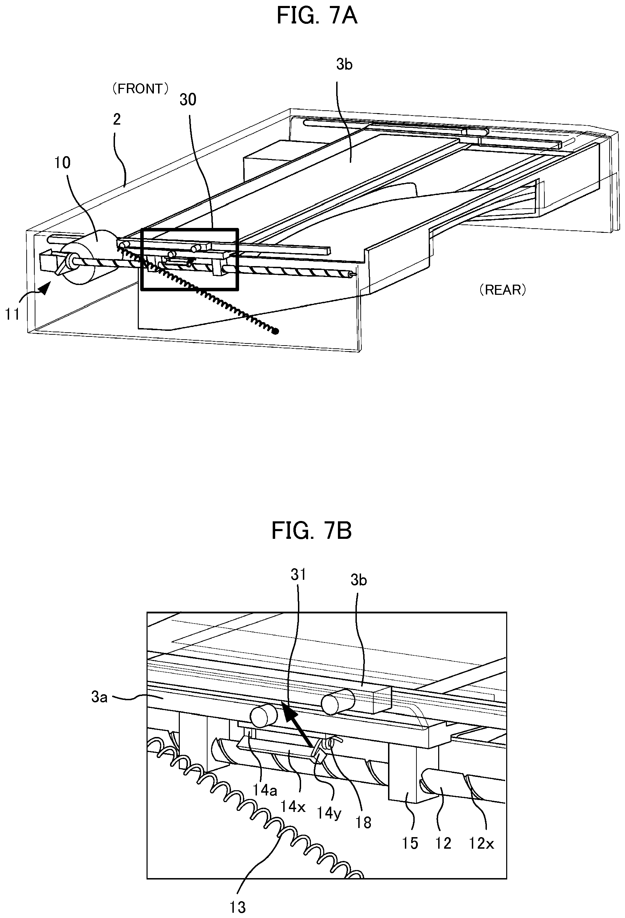

Next, the feed screw receiver 14 will be described in detail. FIG. 7A is a perspective view illustrating the internal structure of the HUD 1, and FIG. 7B is a magnified view of the part of the reference numeral 30 in FIG. 7A. As shown in FIG. 7B, the teeth 14y of the rack 14 of the feed screw receiver 14 is always pressed against the feed screw 12 by the spring 18. The cover 3 is positioned to be seen from the driver's seat, and there is such a concern that the covers 3 may be clogged with a foreign substance at the time of closing. In this view, when a certain load is applied to the covers 3, the point of the rack 14x, i.e., the end on the side of the teeth 14y moves in the direction of the arrow 31 with using the fulcrum 14a of the rack 14 as the center, and the teeth 14y of the rack 14x is disengaged from the groove 12x of the feed screw 12 so that the covers 3 do not receive force larger than a certain level. Thus, damage caused by the clogging of foreign substances can be prevented. The spring 18 is an example of the first urging unit of the present invention.

As described above, in this embodiment, since two covers 3a and 3b are received in the housing 2 in a stacked manner when the covers 3 are opened, the covers 3a and 3b do not occupy a large area. Therefore, the device can be miniaturized as a whole.

### [2nd Embodiment]

In the first embodiment described above, the main cover 3a and the sub cover 3b are urged by a pair of urging springs 13. In the second embodiment, the urging springs are omitted.

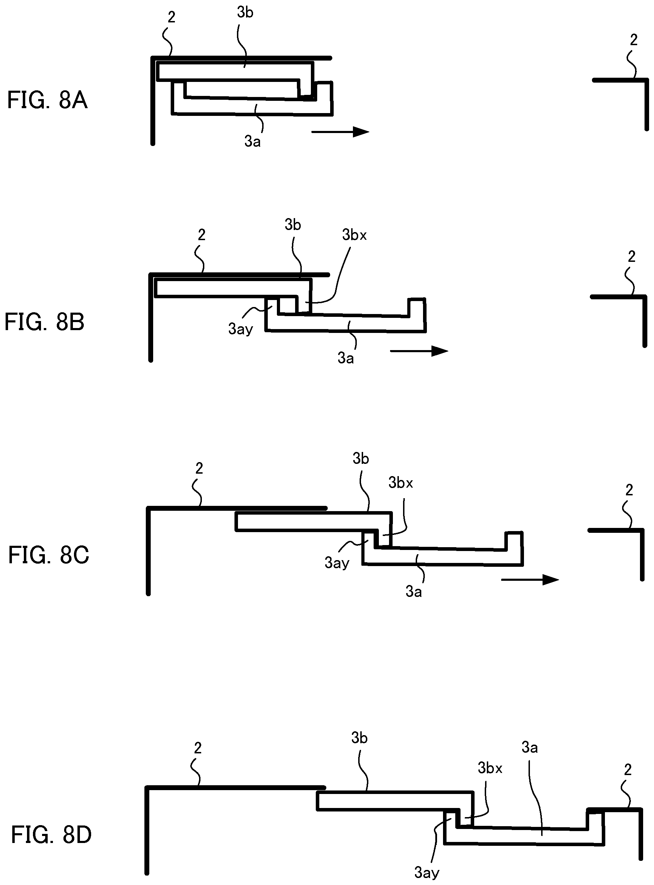

FIGS. 8A to 8D are side views schematically illustrating slide movement when the main cover 3a and the sub cover 3b are closed in the second embodiment. FIG. 8A illustrates the state where the main cover 3a and the sub cover 3b are opened. First, while it is not shown in FIGS. 8A to 8D, the combiner 4 that was standing in the opening 2x is received in the housing 2. Next, the motor 10 is driven to rotate the feed screw 12, and the main cover 3a is slid in the arrow direction. At this time, since the sub cover 3b is not urged by the urging springs 13 in the second embodiment, the sub cover 3b does not move and only the main cover 3a slides in the arrow direction as shown in FIG. 8B.

Then, when the main cover 3a slides further and the projecting part 3ay of the main cover 3a engages with the projecting part 3bx of the sub cover 3b, the sub cover 3b also slides by the movement of the main cover 3a as shown in FIG. 8C. Namely, the sub cover 3b moves in the arrow direction in a manner drawn by the main cover 3a.

After that, the sub cover 3b moves to the end of the movable range, i.e., the end of the sub cover guide groove and stops there. Thereafter, only the main cover 3a slides in the arrow direction. Then, as shown in FIG. 8D, the main cover 3a moves to the end of the movable range, i.e., the end of the main cover guide groove and stops there. In this way, the opening 2x of the housing 2 is closed by the covers 3a and 3b.

In the second embodiment, the operation of opening the covers 3a and 3b is the same as that in the first embodiment.

### INDUSTRIAL APPLICABILITY

This invention can be used for a display device having a cover opening/closing mechanism.

### BRIEF DESCRIPTION OF REFERENCE NUMBERS

- 1: Head-up Display (HUD)
- 2: Housing
- 3a, 3b: Cover
- 4: Combiner
- 10: Motor
- 12: Feed Screw
- 13: Urging Spring
- 14: Feed Screw Receiver

## Claims

1. A display device comprising:
a display member configured to display information;
a housing configured to receive the display member;
an opening formed at one surface of the housing;
a plurality of covers movable to vary an opened area of the opening, each of the covers being smaller in area than the opening; and
a drive device configured to move the covers,
wherein one cover of the plurality of covers is moved by the drive device, and
wherein another cover of the plurality of covers is moved by the one cover.

2. The display device according to claim 1, wherein, in a state where the opening is closed by the plurality of covers, the one cover is positioned nearer from a user than the another cover.

3. The display device according to claim 1, wherein, in a state where the display member is standing up, the another cover is positioned over the one cover.

4. The display device according to claim 3, wherein, in the state where the display member is standing up, the another cover and the one cover are positioned farther from the user than the display member.

5. The display device according to claim 1,
wherein the housing is formed with first guide grooves at positions corresponding to both sides of the one cover,
wherein the housing is formed with second guide grooves at positions corresponding to both sides of the another cover, and
wherein the first guide grooves extend to a nearer position to the user than the second guide grooves.

6. The display device according to claim 1,
wherein a projecting part is formed at both ends of the one cover and one end of the another cover, and
wherein the projecting part of the another cover engages with the projecting parts of the one cover to move the another cover together with the one cover.

7. The display device according to claim 1,
wherein the drive device comprises: a motor configured to generate driving force by rotation; and a transfer unit configured to transfer the driving force to the covers, and
wherein the transfer unit comprises: a plurality of gears configured to transfer the rotation of the motor; and a feed screw configured to rotate by rotation of the gears to move the one cover.

8. The display device according to claim 7,
wherein the feed screw is arranged on one side of the plurality of covers, and
wherein the one cover is formed with a feed screw receiver on the one side of the plurality of covers, the feed screw receiver being formed with a rack.

9. The display device according to claim 8, further comprising a first urging unit configured to urge the rack in a direction of the feed screw.

10. The display device according to claim 9, further comprising a second urging unit configured to urge the another cover downward.

11. The display device according to any one of claims 1 to 10, wherein a number of the another cover is one.
